# EUROPEAN PATENT SPECIFICATION

(11) **EP 0 715 690 B1**
(45) Date of publication and mention of the grant of the patent: **03.09.1997**
(21) Application number: 93923781.4
(22) Date of filing: 01.10.1993
(51) Int. Cl.: F04B 43/00

(54) **PRE-FAILURE WARNING PUMP DIAPHRAGM**
STÖRUNGSVORAUSSAGE BEI EINEM PUMPMEMBRAN
MEMBRANE DE POMPE A PRE-SIGNALISATION DES DEFAILLANCES

(30) Priority: 23.08.1993 US 110684
(43) Date of publication of application: 12.06.1996
(73) Proprietor: W.L. GORE & ASSOCIATES, INC., Newark, Delaware 19714-9206 (US)
(72) Inventor: DELANEY, William, E., Hockessin, DE 19707 (US); MINOR, Raymond, Elkton, MD 21921 (US); MCGREGOR, Gordon, L., Landenberg, PA 19350 (US)
(74) Representative: Klunker . Schmitt-Nilson . Hirsch
(86) International application number: US9309519
(87) International publication number: WO9506205

(56) References cited:
- EP-A- 0 321 225
- WO-A-91/17701
- FR-A- 2 196 514
- GB-A- 2 258 732
- US-A- 4 569 634
- US-A- 4 781 535

## Description

### FIELD OF THE INVENTION

This invention relates to a failure sensing mechanism for use in flexible chemical barriers. It is particularly suited for detection of impending failure before leaks occur in diaphragms, such as are used in pumps.

### BACKGROUND OF THE INVENTION

Barrier layers of chemically resistant materials such as polytetrafluoroethylene (PTFE) are widely used in industry to protect sensitive parts of machinery or equipment from the corrosive effects of acids or other chemicals. One such use is in pump diaphragms commonly used with air or electrically driven diaphragm pumps. In this application an outer chemically resistant overlay diaphragm is commonly used to protect an inner rubber diaphragm from materials that would cause rapid failure of the rubber part alone. In other instances the resistant material provides the sole material of construction of the diaphragm.

In all cases the repetitive flexing of the diaphragm eventually causes failure of the diaphragm. When PTFE is one layer, the PTFE fatigues more readily than commonly used rubbers such as Neoprene, and in those instances, the PTFE fails first. Failure of the diaphragm can result in corrosive material entering a part of the pump that is not designed to come in contact with it. In many cases the corrosive material can result in damage to the pump. In the case of air driven pumps the corrosive material will often mix with the air stream and will as a result enter the environment and potentially result in damage or in injury. Expensive containment systems sometimes are employed as a result.

Attempts have been made to detect leakage when it occurs or contain it after the fact. Leak detection chambers may be built into the pump itself incorporating conductivity sensors, but this results in a more expensive pump design and the need for additional diaphragms to separate the additional detection chambers.

In U.S. Patent 4,569,634 to Myron Mantell a metal or graphite detector is embedded inside the body of a diaphragm. When the diaphragm cracks, the graphite is exposed to the fluid being pumped. The fluid is a conductive fluid and the change in the resulting current flow is detected. The method of 4,569,634 however requires a mesh, screen or web of conductive fibers which may result in difficulty in manufacture of diaphragms having long flexing lifetimes. Furthermore this patent requires that the medium being pumped be conductive and thus the usefulness of the invention is limited.

U.S. Patent 4,781,535 to Frawley and Mearns describes another method in which a continuous circuit trace is supported within the diaphragm. When the diaphragm fails the trace is broken setting off an alarm. However the patent places no emphasis on the trace composition and describes it only as metallic or steel. With PTFE diaphragms the metal will tend to fail at a different time than the diaphragm and may not provide sufficient warning.

### SUMMARY OF THE INVENTION

The invention provides a thin flexible conductive fiber made of conductive PTFE is embedded within a chemical barrier sheet or form made of PTFE. The PTFE sheet, which has good flexing properties and is an excellent barrier layer for chemicals, can then be used to form, either by itself or bonded to rubber, a fully functional diaphragm. If the conductive fiber is laid out to cover substantially the entire area of the diaphragm in a spiral or double spiral or a zigzag or other traversing pattern, it can be passed out of the diaphragm and connected to an electrical sensing circuit. Once the diaphragm incurs fatigue or cracks such as surface stress cracks, the fiber will detect the change in conductivity by suitable electronic means. The conductive fiber is made of material like that of the diaphragm itself, both being made of PTFE, and the flex life of the diaphragm usually will be about the same as that of the fiber.

### DESCRIPTION OF THE DRAWINGS

Figure 1 depicts a three-dimensional view of a typical diaphragm showing electrical leads protruding therefrom.

Figure 2 is a view looking at the diaphragm from the top, and shows one configuration of electrical wiring within the diaphragm (denoted by the dashed lines).

Figure 3 is another view from the top and shows a different configuration of electrical wiring.

Figure 4 is still another top view showing a still different wiring configuration.

Figure 5 shows a cross section of a portion of a pump diaphragm of Figure 1 taken along 5-5.

Figure 6 is a graph depicting percentage in resistance versus linear tension of two conductive wires useful in the invention.

### DESCRIPTION OF THE INVENTION

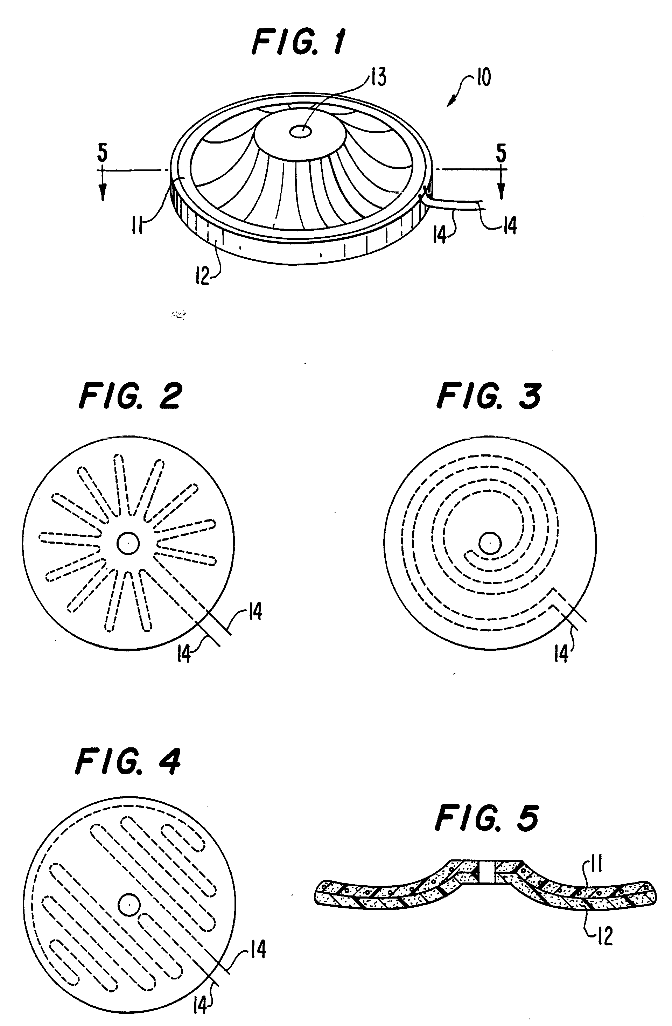

As used herein, the term "diaphragm" means a flexible element that divides two fluid containing compartments. Polytetrafluoroethylene or a laminate in which one layer is PTFE has a conductive PTFE fiber embedded in the PTFE layer. The PTFE fiber can be rendered conductive by filling it with a conductive filler such as metal, metal oxide or conductive carbon, or by plating the fiber. Figure 1 represents a typical diaphragm 10 having a hole 13 for attachment to a pump. The diaphragm is a two-layer composite of PTFE layer 11 and flexible elastomeric layer 12. Leads 14 protrude from the PTFE layer 11. Leads 14 can be attached to appropriate electronic monitoring means to record a break in the electric circuitry.

The fiber is preferably placed closer to the back than to the face of the PTFE layer so that it will be affected by wear late in the useful life of the diaphragm. In one mode the fiber is placed 25 mils deep within a 35 mil (0.89 cm) PTFE diaphragm. This allows a margin of safety (10 mils, 0.025 cm) for detection of stress cracks so that the diaphragm can be replaced prior to any leakage.

The fiber is patterned so as to cover most of the surface two dimensionally so that any penetration or crack in the diaphragm will necessarily result in damage to the fiber. One useful pattern is a spiral of pairs of fiber shorted together in the center as depicted in Figure 3. This pattern is useful since the most commonly seen failure in such a diaphragm is one or more cracks formed in from the face of the diaphragm and proceeding inwards toward the rubber backing in a radial fashion in the flexing portion of the diaphragm. A spiral pattern in the conductive fiber thus will intersect with any radial crack. Alternate patterns include traversing rows such as is shown in Figure 4, but other geometry's are also possible, such as is shown in Figure 2. In any case the fiber also passes through the edge of the diaphragm 14 to allow connection to electronic circuitry and a source of low voltage power. Window comparator circuitry is well known and particularly useful in detecting any change in the conductivity of a conductive trace whether up or down.

The invention is applicable to any flexible diaphragm, in particular to diaphragms which are composites of a face layer of polytetrafluoroethylene (PTFE) and an air pressure side layer of a resilient elastomeric material.

The PTFE layer is preferably a layer of dense PTFE, either full density PTFE or densified stretched PTFE. An example of full density PTFE is skived PTFE. Densified PTFE can be made by compressing porous PTFE. The PTFE material provides the composite diaphragm with an inert outside surface thereby increasing the durability, and chemical resistance of the diaphragm. The solid PTFE layers other surface is adhered to the resilient elastomeric material. Optionally, this inside other surface may be treated, e.g., with alkali naphthanates, to increase the surface energy of the PTFE and thereby increase its adherence to the reinforced flexible composite material.

The flexible elastomeric layer can be a thermosetting elastomer, thermoplastic elastomer, or a thermoplastic polymer having a flexural elastic modular (ASTM D790-84A) of less than 1,400 MPa.

The thermosetting elastomer can be a fluoroelastomer including perfluoroelastomers, fluoroelastomer containing silicone moieties, nitrile elastomer, acrylic elastomer, olefin diene elastomer, chlorosulfonated polyethylene elastomer, polychloroprene elastomer, butyl and halogenated butyl elastomer, styrene-butadiene elastomer, polydiene elastomer or silicone elastomer, or the like.

The thermoplastic elastomer can be a copolyetherester elastomer, polyurethane elastomer, styrene polyolefin block copolymer elastomer, polyamide elastomer, or ethylene copolymer elastomer, or the like.

The thermoplastic having a flexural elastic modulus (ASTM-D790-84A) less than 1,400 MPa, can be selected from fluorinated thermoplastics such as copolymers of tetrafluoroethylene, copolymers of vinylidine fluoride, copolymers of chlorotrifluoroethylene, polyolefins, or plasticized polyvinyl chlorides, or the like.

The PTFE layer is adhered to the resilient elastomeric layer through any known means, for example, by application of a sufficient amount of heat and pressure. The diaphragm may contain ribs made by placing the PTFE/elastomeric composite into a mold of desired shape and applying heat and pressure.

The conductive filler containing fiber is preferably filled with carbon and is preferably a fiber made of expanded porous polytetrafluoroethylene. If desired, the PTFE can be expanded porous PTFE which is comprised of a structure of nodes interconnected by fibrils, as taught in U.S. patents 3,953,566, 4,187,390, and 3,962,153.

The fiber can be obtained in a number of ways, e.g., by first making a film of the PTFE. The film may be formed by blending a fine powder PTFE resin with mineral spirit and then adding a conductive particulate filler to obtain a compound of fine powder PTFE resin and conductive particulate filler, as is described in copending United States application Serial No. 915,484. An aqueous dispersion PTFE resin can be mixed with conductive particulate filler and the mixture is co-coagulated by rapid shearing of the aqueous dispersion, or though destabilization of the aqueous dispersion with salt, acid, polyethylene imine or the like. A coagulum of fine powder PTFE resin and conductive particulate is then formed and dried into cakes. Once dry, the cakes are crumbled and lubricated with a mineral spirit and blended to form a compound.

Either of the above described compounds can then be compressed into a billet and subsequently extruded through a die by a ram-type extruder forming a coherent extrudate. The coherent extrudate is then compressed between a pair of calendar rollers to reduce its thickness. Mineral spirit is removed from the calendered extrudate by passing the extrudate over a series of heated rollers set above the boiling point of the mineral spirits.

The dry extrudate can then be expanded by the general procedure taught in United States Patent 3,953,566 to Gore. The dry coherent calendered extrudate can be initially rapidly stretched uniaxially in a longitudinal direction 1.2x to 5000x its starting length, and preferably 2x to 100x, at a stretch rate over 10% per second at a temperature of between 35 to 327°C. This process produces an expanded porous PTFE matrix in continuous film form in which conductive particulate filler is distributed.

The film may next be slit to a desired width to form a continuous slit film fiber having a substantially rectangular profile. The continuous slit film fiber may then be stretched in a longitudinal direction up to fifty times its length, again through the general method of stretching taught by United States Patent 3,953,566 to Gore. This second stretching step increases the strength of the resultant fiber through increased orientation of the ePTFE matrix. The total amount of stretch is a function of the degree to which the PTFE matrix has been filled with filler--the greater the percentage of particulate filler, the less the continuous slit film fiber may be stretched.

The continuous slit film fiber may subsequently be subjected to a temperature in excess of 342°C in order to perform an amorphous locking step. This basic procedure is again taught in United States Patent 3,953,566 to Gore. If the fiber is fully restrained longitudinally, the amorphous locking step further increases the strength and density of the expanded continuous slit film fiber.

Alternatively, prior to slitting, the ePTFE matrix in continuous film form may be compressed and densified, such as through use of adjacent nip rollers, as is taught in United States Patent 4,985,296 to Mortimer, Jr. Compression and densification increases contact between individual conductive particulate filler particles thereby increasing conductivity of the ePTFE matrix in continuous film form. To increase the strength of the thin ePTFE matrix in continuous film form, multiple layers of the coherent extrudate can be stacked longitudinally and calendered upon one another forming a layered article. The layered article is subsequently dried, expanded and densified to produce a thin ePTFE matrix of greater strength when compared to an analogous thin ePTFE matrix produced from a single layer of ePTFE matrix. The thin ePTFE matrix may then be subjected to the amorphous locking step previously described. The thin ePTFE matrix in continuous film form may then be slit to a desired width by a slitter or similar means for cutting films to form a thin continuous fiber having a substantially rectangular profile.

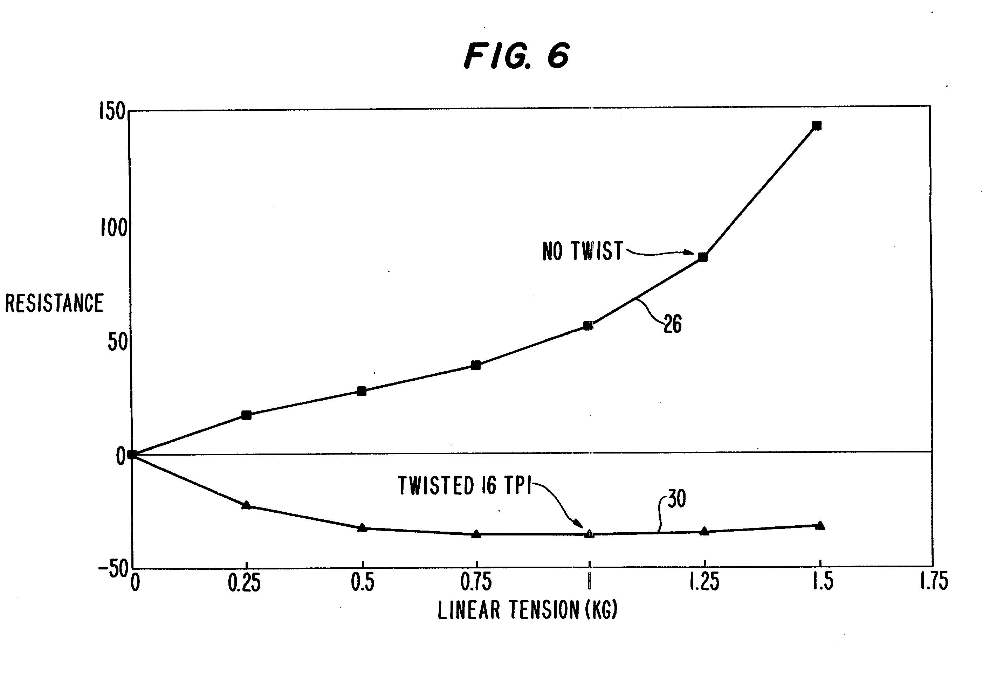

Once such a fiber.is formed, its conductivity can be increased through densification. Preferably, densification is accomplished by twisting the fiber about its central longitudinal axis. The resultant twisted fiber is more dense than a similar untwisted fiber and appears rounder. Moreover, the twisted fiber exhibits greater maintenance of its volume resistivity upon exposure to tensile forces when compared to an analogous compressed untwisted fiber. The twisting may comprise 1 to 18 twists per centimeter, with 4 to 11 twists per centimeter being preferred. The relative advantages of employing a twisted conductive fiber over other conductive elements is shown in the graph of Figure 6. Figure 6 depicts the percentage (%) change in resistance versus linear tension (kg) of two different samples of conductors: line 26 is the plot for a conventional flat, filled ePTFE conductive fiber (i.e. showing an increase in resistance with an increase in tension); and line 30 is the plot of a twisted ePTFE fiber (i.e. showing a decrease in resistance with an increase in tension). Twisting can be achieved on a standard fiber twisting machine.

Fibers can be formed through this procedure having a wide range of bulk tensile strength and volume resistivities, such as: a tensile strength of 65,000 KPa or greater with a volume resistivity of 1 x 10³ ohm cm or less; a tensile strength of 65,000 KPa or greater with a volume resistivity of 10 ohm cm or less; and a tensile strength of 200,000 KPa or greater and a volume resistivity of 1 x 10³ or less. Tensile strength may be determined using the method described in ASTM Standard D882-81 (i.e. calculated by dividing the maximum longitudinal load by the original cross-sectional area of the specimen). The test performed varied from the test as published with respect to the material tested. ASTM D882-81 is for testing thin plastic sheeting and not fibers. The difference is due to the dimensions of the sample. The thickness of the fibers is determined through a snap gauge. Care is taken not to crush the sample with the presser foot of the snap gauge to obtain an accurate thickness. Width of the sample is determined through measurement on an optical microscope. The samples are tested on a constant rate of grip separation machine to break. Force at maximum load samples is determined. The volume resistivity of the fibers may be determined using the method described in ASTM D257-90, "Standard Test Methods for D-C Resistance or Conductance of Insulating Material."

To embed the fiber in the PTFE layer of the diaphragm, the fiber is placed in a desired pattern trace on the surface of a sheet of PTFE. Then another sheet of PTFE is placed on top. This assembly is then placed in a bag or other flexible container and a vacuum drawn. The container is then heated and external pressure applied to bind the two PTFE sheets together with the fiber enclosed inside (the densified stretched PTFE can be made in the same way).

The formed product can then be shaped into a diaphragm or it can be laminated to an elastomeric sheet, such as neoprene rubber.

In operation an electrical current is applied to one of the leads 14 and current flows through the fiber. The current is monitored and if a break occurs, the current flow stops and is detected by an appropriate instrument. In addition, the current can be monitored for electrical change due to pressure on the diaphragm from the liquids being pumped. This is due to the change in conductivity or impedance as the pressure causes the fiber to change physical dimensions temporarily.

Periodic or constant monitoring of the status of the diaphragm is possible. For instance, a base-line electrical signal can be determined by applying an electric current through the diaphragm when it is first installed. By acquiring a second signal reading at a later time, the second signal can be compared with the base-line signal to determine if any changes have occurred. Determination and quantification of changes can then be used to chart the operational characteristics of the diaphragm. Further, by establishing a pattern of performance, it may also be possible to predict when the diaphragm is nearing the end of its operational life.

Using these principles, a number of monitoring techniques may be feasible. It is possible to establish a network of monitors which can provide instant feedback on the condition of a number of parallel pumps and by providing appropriate conduits and computer controlled valving, diaphragm failure in a first line can be detected and flow can be automatically routed around the defective diaphragm to a parallel second line without shutting down any equipment. A signal can then notify an operator that replacement of the defective diaphragm is required.

Similarly, with a compressive and/or tension force responsive conductive fiber, a base-line signal can be determined prior to the installation of the diaphragm. Once installed, changes in the electrical properties of the diaphragm can be used to judge the amount of pressure being applied in operation. In this manner, the amount of pressure on the diaphragm can be readily quantified.

The electrical monitoring apparatus may take any suitable form which will provide some quantitative measurement of an electrical property of the conductive fiber. In its preferred form, the electrical apparatus comprises an analog or digital meter or signal electrical apparatus comprises an analog or digital meter or signal generating device which simply provides a measure of conductivity or impedance or the like.

### Preparation of Fiber

A conductive fiber was produced in the following manner.

A mixture of 85% by weight of a fine powder PTFE resin in an aqueous dispersion and 15% by weight of a conductive carbon black (Ketjenblack 300-J available from Akzo Chemical) was made. First a slurry was made of carbon black in deionized water, and agitated with a rotating impeller. Fine powder PTFE aqueous dispersion (AD-059, available from ICI Americas Inc.) was added, and the carbon black and PTFE co-coagulated. After drying, the coagulum was combined in a blender with an amount of an odorless mineral spirit forming a compound, the compound was compressed into a billet, and the billet extruded to form a coherent extrudate.

The coherent extrudate was compressed between calender rolls and the odorless mineral spirit was volatilized. The dry coherent calendered extrudate was subsequently expanded at a ratio of 2:1 at a temperature of 270°C.

The dry coherent calendered extrudate was slit to 7.6mm widths by passing the dry coherent calendered extrudate between a set of gapped blades. The slit coherent extrudate was then expanded uniaxially in the longitudinal direction at a ratio of 19.2 to 1 and subsequently subjected to an amorphous locking step by exposing it to temperatures over 340°C.

### Example

A continuous spiral of carbon filled (15% by weight) ePTFE thread (denier 684) obtained from W. L. Gore & Associates, Inc. was patterned by hand onto a sheet of full density PTFE approximately two feet by three feet and 10 mils thick an additional 10 mils of PTFE were laid on top. The lead portions of the spiral were protected from contact with the PTFE by means of a strip of polyimide film on each side. The assembly was placed between two steel plates and enclosed in a bag made of polyimide film. A means was provided to draw a vacuum inside the bag and the assembly was inserted into an autoclave. A vacuum of 29 inches of mercury was drawn on the bag while a pressure of 250 psi was applied within the autoclave chamber. The temperature was raised to approximately 370°C. In this way the PTFE was sintered together into one 20 mil sheet with the carbon filled fiber embedded in the center.

The sheet described above was etched by immersing for 30 seconds in an alkali naphthanate solution available commercially under the trademark TETRA-ETCH from W. L. Gore & Associates, Inc., Elkton, Maryland. A ten inch diameter circular piece containing the carbon filled spiral was cut from the resulting sheet and a 30% toluene solution of a bonding agent (Chemlok 250 available from the Lord Corporation of Erie, Pennsylvania) was applied by brush and allowed to dry.

A 4.2mm thick layer of an elastomeric polymer cut to the same dimensions was applied to the adhesive previously applied to the PTFE surface (Neoprene compound based on Neoprene GK available from E. I. duPont de Nemours & Co. of Wilmington, Delaware). The elastomeric material polymer was adhered to the PTFE surface by placing them into a platen press heated to 93°C for about 30 seconds.

The resulting pre-form was placed in a diaphragm mold. The mold was placed in a platen press which applied 7580 MPa to the composite at a temperature of 170°C for 20 minutes. The mold was cooled while still under pressure until it reached 70`C,

The resulting diaphragm was removed from the mold and any extra material was trimmed from the final part. This part was then installed in a Wilden M-4 pump driven by 400 N of air pressure against a 127 cm head of water at a rate of 66 cycles per minute. The leads were connected to a hand held resistance meter. The resistance was measured at .03 megohms. The diaphragm was run until the resistance suddenly climbed to 20 megohms at which point the test was stopped and the pump disassembled to inspect the diaphragm. Upon inspection it was found that the diaphragm had developed several severe radial creases resulting in a partial severance of the conductive fiber. The pump had been run 289,000 cycles.

## Claims

1. A flexible pump diaphragm (10) containing one or more layers (11,12) of flexible material in which one layer is comprised of densified porous polytetrafluoroethylene, said polytetrafluoroethylene layer having embedded within it an electrically conductive expanded porous polytetrafluoroethylene fiber, in which the ends of the fiber (14) are exposed for connection to an electrical system.

2. The diaphragm of Claim 1 wherein the diaphragm (10) is circular and the fiber is patterned within the polytetrafluoroethylene in the form of a spiral so as to cover substantially all the area within the periphery of the pump.

3. The diaphragm of Claim 1 wherein the diaphragm (10) is circular and the fiber is patterned within the polytetrafluoroethylene in the form of a radially disposed trace so as to cover substantially all the area within the periphery of the pump.

4. The diaphragm of Claim 1 wherein the electrical conductivity in the fiber is provided by particles of conductive carbon.

5. A method for verifying the condition of a pump diaphragm according to one of the claims 1 to 4 which comprises:
providing a diaphragm (10) according to one of the claims 1 to 4 having a conductive fiber within the diaphragm (10) and having means to connect the conductive fiber to a monitoring apparatus;
mounting the diaphragm (10) in a pump;
monitoring the condition of the diaphragm (10) by measuring changes in conductivity through the conductive fiber.

## Patentansprüche

1. Flexible Pumpenmembran (10), die eine oder mehrere Schichten (11, 12) eines flexiblen Materials enthält, wovon eine Schicht verdichtetes, poröses Polytetrafluorethylen umfaßt, wobei in die Polytetrafluorethylen-Schicht eine elektrisch leitende Faser aus expandiertem, porösen Polytetrafluorethylen eingebettet ist, und die Enden der Faser (14) für den Anschluß an ein elektrisches System freiliegen.

2. Membran nach Anspruch 1, bei der die Membran (10) kreisförmig ist, während die Faser innerhalb des Polytetrafluorethylens in Form eines Spiralmusters angeordnet ist, um im wesentlichen die gesamte Fläche innerhalb des Umfangs der Pumpe abzudecken.

3. Membran nach Anspruch 1, bei der die Membran (10) kreisförmig ist und die Faser innerhalb des Polytetrafluorethylens in Form einer sich radial erstreckenden Spur als Muster ausgebiidet ist, damit sie im wesentlichen die gesamte Fläche innerhalb des Umfangs der Pumpe abdeckt.

4. Membran nach Anspruch 1, bei der die elektrische Leitfähigkeit in der Faser durch Partikel aus leitendem Kohlenstoff erhalten wird.

5. Verfahren zum Nachweisen des Zustands einer Pumpenmembran gemäß einem der Ansprüche 1 bis 4, umfassend:
Bereitstellen einer Membran (10) nach einem der Ansprüche 1 bis 4, bei der sich eine leitende Faser innerhalb der Membran (10) befindet und eine Einrichtung vorgesehen ist, um die leitende Faser an eine Überwachungsvorrichtung anzuschließen;
Anordnen der Membran (10) in einer Pumpe;
Überwachen des Zustands der Membran (10) durch Messen von Änderungen der Leitfähigkeit durch die leitende Faser.

## Revendications

1. Une membrane flexible (10) de pompe contenant une ou plusieurs couches (11, 12) de matière flexible, dans laquelle l'une des couches est constituée de polytétrafluoréthylène poreux densifié, une fibre poreuse expansée électriquement conductrice de polytétrafluoréthylène étant enrobée dans ladite couche de polytétrafluoréthylène, les extrémités de la fibre (14) étant exposées pour être connectées à un système électrique.

2. La membrane selon la revendication 1, dans laquelle la membrane (10) est circulaire et la fibre est configurée à l'intérieur du polytétrafluoréthylène sous forme d'une spirale de manière à couvrir sensiblement toute la superficie à l'intérieur de la périphérie de la pompe.

3. La membrane selon la revendication 1, dans laquelle la membrane (10) est circulaire et la fibre est configurée à l'intérieur du polytétrafluoréthylène sous forme d'une trace disposée radialement de manière à couvrir sensiblement toute la superficie à l'intérieur de la périphérie de la pompe.

4. La membrane selon la revendication 1, dans laquelle la conductivité électrique dans la fibre est réalisée par des particules de carbone conducteur.

5. Un procédé de vérification de la condition d'une membrane de pompe selon l'une des revendications 1 à 4 qui comprend les étapes consistant à:
réaliser une membrane (10) selon l'une des revendications 1 à 4 qui contient une fibre dans la membrane (10) et comporte un moyen de connexion de la fibre conductrice à un appareil de contrôle;
monter la membrane (10) dans une pompe;
contrôler l'état de la membrane (10) en mesurant des variations de la conductivité à travers la fibre conductrice.
